# EUROPEAN PATENT SPECIFICATION

(11) **EP 1 028 094 B1**
(45) Date of publication and mention of the grant of the patent: **21.05.2003**
(21) Application number: 00110476.9
(22) Date of filing: 20.06.1997
(51) Int. Cl.: C03C 4/14, C03C 10/00, H01M 10/36

(54) **Lithium ion conductive glass-ceramics and electric cells and gas sensors using the same**
Lithium-Ionen leitende Glaskeramiken und damit hergestellte elektrische Zellen und Gassensoren
Vitro-céramiques conducteurs d'ions de lithium, cellules électriques et senseurs de gaz utilisant ces vitro-céramiques

(30) Priority: 06.02.1997 JP 3830397
(43) Date of publication of application: 16.08.2000
(62) Divisional of application: 97110106.8
(73) Proprietor: KABUSHIKI KAISHA OHARA, Kanagawa-ken (JP)
(72) Inventor: Fu, Jie, c/o Kabushiki Kaisha Ohara, Sagmihara-shi, Kanagawa-ken (JP)
(74) Representative: Jönsson, Hans-Peter, Dr.Dipl.-Chem.

(56) References cited:
- EP-A- 0 718 247
- US-A- 4 985 317
- MIN J R ET AL: "THE EFFECTS OF MIXED GLASS FORMERS IN THE PROPERTIES OF NON-CRYSTALLINE LITHIUM ION CONDUCTORS" PHYSICA STATUS SOLIDI (A). APPLIED RESEARCH,DE,BERLIN, vol. 148, no. 2, 1995, pages 383-388, XP002057134 ISSN: 0031-8965
- DATABASE WPI Section Ch, Week 199105 Derwent Publications Ltd., London, GB; Class L03, AN 1991-032877 XP002057135 & JP 02 302307 A (MATSUSHITA ELEC IND CO LTD), 14 December 1990 (1990-12-14) -& JP 02 302307 A 14 December 1990 (1990-12-14)

## Description

This invention relates to an alkali ion conductive glass-ceramics and, more particularly, to a lithium ion conductive glass-ceramics suitable for use as wholly solid electric cells, gas sensors and electrochemical devices of various types, and electric cells and gas sensors using such glass-ceramics.

Recent development in electronics has brought about high-performance electronic devices of a compact and light-weight design and, as a power source of such electronic devices, development of an electric cell of a high energy density and a long life is strongly desired.

Lithium has the highest oxidation-reduction potential of Li/Li⁺ of all metal elements and has the smallest mass per 1 mol and, therefore, lithium cell can provide a higher energy density than other types of cells. Moreover, if a lithium ion conductive solid electrolyte is used, this electrolyte can be made very thin and, therefore, a cell of a thin film can be formed and increase in energy density per unit volume can thereby be realized.

A lithium ion cell which has been realized to date uses an organic electrolyte solution as its electrolyte and this makes it difficult to achieve a cell of a compact design such as a thin film design. This lithium ion cell has additional disadvantages that it has likelihood of leakage of electrolyte solution and likelihood of spontaneous combustion. If this lithium ion cell is replaced by a cell employing an inorganic solid electrolyte, a wholly solid cell of a high reliability will be realized. For this reason, studies and developments of a solid electrolyte having a high conductivity have been vigorously made for realizing a wholly solid lithium cell.

Moreover, carbon dioxide gas produced by combustion of fossil fuel is a main cause of the green-house effect which has recently become a serious problem and it has become necessary to incessantly watch the concentration of carbon dioxide gas. Therefore, establishment of a system for detecting carbon dioxide gas is a matter of increasing importance for the maintenance of a comfortable life in the future human society.

Carbon dioxide gas detection systems which are currently in use are generally of a type utilizing absorption of infrared ray. These systems however are large and costly and besides are very susceptible to contamination. For these reasons, studies have recently been actively made to develop a compact carbon dioxide gas sensor using a solid electrolyte. Particularly,- many reports have been made about studies using a lithium ion sold electrolyte.

For realizing such gas sensor using solid electrolyte, development of a solid electrolyte which is highly conductive, chemically stable and sufficiently heat proof is indispensable.

Among known electrolytes, Li3N single crystal (Applied Physics letter, 30(1977) 621-22) and LiI-Li₂S-P₂S₅, LiI-Li₂S-SiS₄ and LiI-Li₂S-B₂S₃ glasses (Mat. Res. Bull., 18(1983) 189) have high conductivity of 10⁻³S/cm or over. These materials, however, have the disadvantages that preparation and handling of these materials are difficult and these materials are not sufficiently heat proof. Particularly, these materials have the fatal disadvantage that decomposition voltage of these materials is so low that, when they are used for an electrolyte of a solid cell, a sufficiently high terminal voltage cannot be obtained.

An oxide lithium solid electrolyte does not have the above described disadvantages and has a decomposition voltage which is higher than 3V and, therefore, it has possibility of usage as a wholly solid lithium cell if it exhibits a high conductivity at room temperature. It is known in the art that conductivity in an oxide glass can be increased by increasing lithium ion concentration. However, there is limitation in increase in the lithium ion concentration even if rapid quenching is employed for glass formation and conductivity of this glass at room temperature is below 10⁻⁶S/cm at the highest.

Japanese Patent Application Laid-open Publication No. Hei-8-2239218 discloses a gas sensor using a thin film of a lithium ion conductive glass. The conductivity of this lithium ion conductive glass thin film is between 1.7 x 10⁻⁷ and 6.1 x 10⁻⁷. This is not a sufficiently high value and a solid electrolyte having a higher conductivity is desired.

An oxide ceramic having the highest conductivity at room temperature is Li_{1+X} Al_{X}Ti_{2-X}(PO₄)₃. When X is 0.3, the conductivity thereof is 7 x 10⁻⁴S/cm at room temperature (J. Electrochem. Soc., 137 (1990) 1023). Oxide ceramics are superior in conductivity to glasses but have the disadvantages that they require a troublesome process for manufacturing and that they are difficult to form, particularly to a thin film.

In short, the prior art lithium ion solid electrolytes have the problems that they are either low in conductivity, hard to handle, hard to form to a compact design such as a thin film.

It is, therefore, an object of the invention to provide glass-ceramics which have solved these problems and exhibit a very high alkali ion conductivity in the order of 10-³S/cm at room temperature.

It is another object of the invention to provide an alkali cell and a gas sensor of a high performance by utilizing such glass-ceramics.

As described above, Li_{1+X}Al_{X}Ti_{2-X}(PO₄)₃ ceramics exhibit conductivity of 10⁻⁴S/cm or more at room temperature. These ceramics, however, have pores and a large grain boundary which can not be eliminated completely and existence of these pores and grain boundary results in a decrease in conductivity. If, therefore, glass-ceramics including the above crystal are provided, there will be no pores and the grain boundary will be improved and, as a result, a solid electrolyte having a higher conductivity is expected to be provided. Besides, glass-ceramics which share a feature of glass can be easily formed into various shapes including a thin film by utilizing this feature of glass. For these reasons, glass-ceramics are considered to have practical advantages over ceramics made by sintering.

As a result of studies and experiments made by the inventor of the present invention on the basis of the above described basic concept, the inventor has succeeded in obtaining glass-ceramics having a very high -lithium ion conductivity in the order of 10⁻³S/cm at room temperature by producing glasses including the ingredients of the above described crystal and causing the crystal phase to grow from these glasses by heat treating these glasses.

The inventor of the present invention has further succeeded in obtaining glass-ceramics having the high lithium ion conductivity in the order of 10⁻³S/cm at room temperature by producing glasses including ingredients of P²O⁵, SiO², TiO², M²O³ (where M is Al or Ga) and Li₂O and causing a crystal phase of a conductive crystal Li_{1-X+Y}M_{X}Ti_{2-X}Si_{Y}P_{3-Y}O₁₂ to grow from the glasses by heat treating these glasses, **glass-ceramics comprising in mol %:**

| | |
|---|---|
| **P**_{**2**}**O**_{**5**} | **26 - 40%** |
| **SiO**_{**2**} | **0.5 - 12 %** |
| **TiO**_{**2**} | **30 - 45 %** |
| **M**_{**2**}**O**_{**3**} **(where M is Al or Ga)** | **5 - 10 %** |
| **Li**_{**2**}**O** | **10 - 18 %** |

and **containing Li**_{**1+X+Y**}**M**_{**X**}**Ti**_{**2-X**}**Si**_{**Y**}**P**_{**3-Y**}**YO**_{**12**} **(where M is Al and/or Ga, 0 < X ≤ 0.4 and 0 < Y ≤ 0.6) as a main crystal phase.**

Preferably, said heat treatment is characterized by initially heating the glass under a temperature ranging from 680 °C to 800 °C and subsequently heating the glass under a temperature which is higher by 200 °C to 350 °C than the initial heating.

In another aspect of the Invention, said glass-ceramics comprise in mol %:

| | |
|---|---|
| P₂O₅ | 26 - 40% |
| SiO₂ | 0.5 - 12 % |
| TiO₂ | 32 - 45 % |
| Al₂O₃ | 5 - 10 % |
| Li₂O | 10 - 18 %. |

In another aspect of the invention, said glass-ceramics comprise in mol %:

| | |
|---|---|
| P₂O₅ | 26 - 40% |
| SiO₂ | 0.5 - 12 % |
| TiO₂ | 32 - 45 % |
| Ga₂O₃ | 5 - 10 % |
| Li₂O | 10 - 18 %. |

According to the invention, there are provided lithium ion conductive glass-ceramics which exhibit a very high conductivity in the order of 10 3S/cm at room temperature. In addition to having the high conductivity, the glass-ceramics made according to the invention have such an excellent formability that they can be easily formed into various shapes including a thin film, and they are thermally and chemically stable so that they are suitable for use as electrolytes of wholly solid cells, sensors and other various electrochemical devices.

In another aspect of the invention, there is provided a solid electrolyte for an electric cell characterized in that a lithium ion conductive glass-ceramic as defined above is used as said solid electrolyte.

In another aspect of the invention, there is provided a solid electric cell characterized in that a lithium ion conductive glass-ceramic as defined above is used as a solid electrolyte.

In another aspect of the invention, there is provided a solid electrolyte for a gas sensor characterized in that a lithium ion conductive glass-ceramic as defined above is used as said electrolyte.

In still another aspect of the Invention, there is provided a gas-sensor characterized in that a lithium ion conductive glass-ceramic as defined above is used as a solid electrolyte.

The compositions of the glass-ceramics made according to the invention are expressed on the basis of compositions of oxides as in their base glasses. The above described content ranges of the respective ingredients have been selected for the reasons stated below.

The glass-ceramics according to the invention made of the P₂O₅-SiO₂-TiO₂-(Al₂O₃, Ga₂O₃)-Li₂O system, the above described composition ranges have been selected because, within these composition ranges, dense glass-ceramics containing Li_{1+X+Y}M_{X}Ti_{2-X}Si_{Y}P_{3-Y}O₁₂ (where 0 < X ≤ 0.4, 0 < Y ≤ 0.6) as a main crystal phase and exhibiting a high lithium ion conductivity at room temperature were obtained by heat treating glasses -of the same composition ranges. It has been found that the same crystal can be precipitated even in composition range outside of the above described composition ranges but this crystal does not constitute a main crystal phase of a glass-ceramic produced and conductivity of this glass-ceramic is not sufficiently high.

In this system, SiO₂ is a very important ingredient. By adding SiO₂, the glass forming range is broadened and, moreover, melting property and thermal stability of the glass are improved and an excellent conductivity in the order of 10⁻³S/cm can be obtained.

A part of Al or Ga may be replaced by one of such trivalent metal elements such as B, In, Sc, Fe and Cr or one of such divalent metal elements as Mg and Zn. Likewise, a part of Ti may be replaced by Zr and a part of Si may be replaced by Ge. In these cases, however, the amount of Al, Ga, Ti or Si replaced by such metal element should not exceed 5%. If the amount of the replaced metal element exceeds 5%, conductivity will drop significantly.

For improving the melting property of the glass, As₂O₃, Sb₂O₃, Ta₂O₅, CdO or PbO may be added. The amount of such ingredient however should not exceed 3%. If the amount of such ingredient exceeds 3%, conductivity of the glass-ceramic will decrease as the amount of addition of the ingredient Increases.

A method for manufacturing the conductive glass-ceramics of the P₂O₅-SiO₂-TiO₂-(Al₂O₃, Ga₂O₃)-Li₂O system will now be described.

Starting materials are weighed at a predetermined ratio and mixed uniformly and the mixed materials are thereafter put in a platinum crucible and heated and melted in an electric furnace. First, gas components coming from the raw materials are evaporated at 700 °C and then the temperature is raised to 1400°C to 1500 °C and the materials are melted at this temperature for about one to two hours. Then the melt is cast onto a stainless steel plate to form a sheet glass. The glass thus produced is thereafter subjected to heat treatment by heating it under a temperature ranging from 680 °C to 800°C for about twelve hours and subsequently heating it under a temperature which is higher by 200 °C to 350 °C for about twenty-four hours and glass-ceramics containing Li_{1+X+Y}M_{X}Ti_{2-X}Si_{Y}P_{3-Y}O₁₂ as a main crystal phase and having a high lithium ion conductivity is produced.

This two-step heat treatment method is applicable also to the production of the glass-ceramics of the P₂O₅-TiO₂-(Al₂O₃, Ga₂O₃)-Li₂O system. Conversely, the glass-ceramics of the P₂O₅-SiO₂-TiO₂-(Al₂O₃, Ga₂O₃)-Li₂O system can be produced by employing the one step heat -treatment method described above with respect to the glass-ceramics of the P₂O₅-TiO₂-(Al₂O₃, Ga₂O₃)-Li₂O system.

In the accompanying drawings,
Fig. 1 is a graph showing an X-ray diffraction pattern of Example 1;
Fig. 2 is a sectional view of an example of a lithium cell using a lithium ion conductive solid electrolyte;
Fig. 3 is a sectional view showing an example of a gas sensor using a lithium ion conductive solid electrolyte;

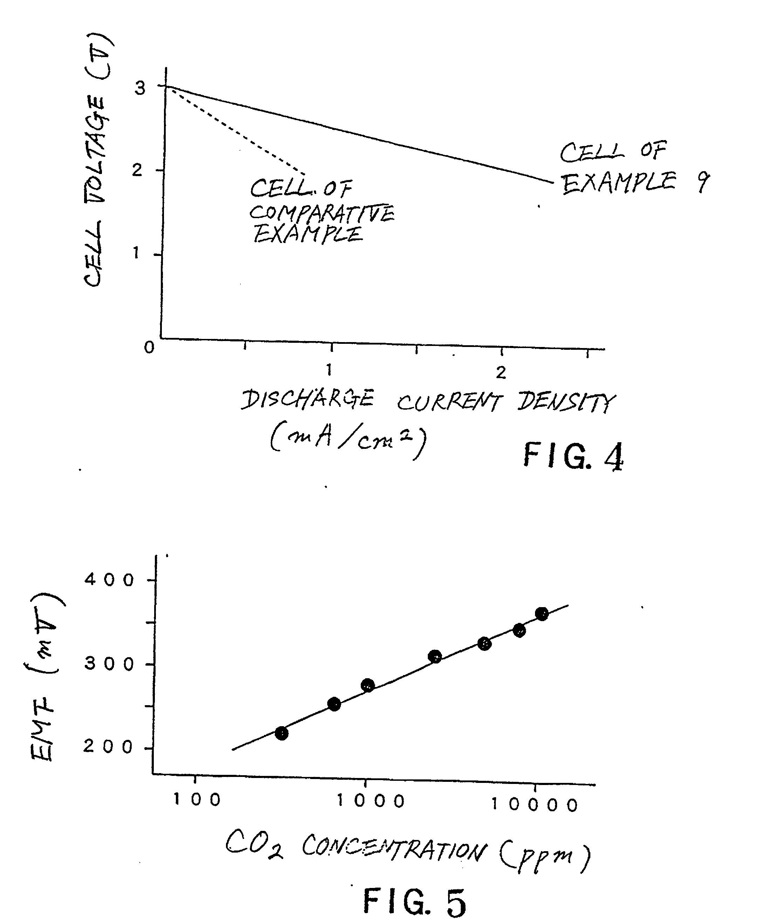

Fig. 4 is a graph showing an effective discharge characteristic of the cell shown in Fig. 2; and
Fig. 5 is a graph showing an electromotive force characteristic by a carbonate gas partial pressure at room temperature of the gas sensor shown in Fig. 3.

### Examples

Examples of the glass-ceramics made according to the invention will now be described. It should be noted that these examples are illustrative only and the scope of the invention in no way is restricted by these examples.

### Example 1

As starting materials, NH₄H₂PO₄, SiO₂, TiO₂, Al(OH)₃ and Li₂CO₃ were used. These starting materials were weighed to constitute a composition of 32P₂O₅8SiO₂-41TiO₂-5Al₂O₃-14Li₂O in mol %. The materials were mixed uniformly and then put in a platinum crucible and heated and melted in an electrical furnace. First, CO₂, NH₃ and H₂O coming from the raw materials were evaporated at 700°C. Then the temperature was raised to 1450 °C and the materials were melted by heating them at this temperature for 1.5 hour. Thereafter, the melt was cast onto a stainless steel plate to form a uniform sheet glass. The glass was annealed at 550 °C for two hours for removing thermal stress of the glass.

The glass thus produced was cut into specimens each having the size of 20 x 20 mm. The specimens of glass were polished on both surfaces and subjected to heat treatment at a temperature of 800 °C for 12 hours and then at 1000°C for 24 hours to produce a dense glass-ceramic. The crystal phase precipitated in the specimens was determined by the powder X-ray diffraction to be Li_{1+X+Y} Al_{X}Ti_{2-X}Si_{Y}P_{3-Y}O₁₂. The glass-ceramic exhibited a very high conductivity of 1.5 x 10⁻³S/cm at room temperature (Table 2, Example No. **1**).

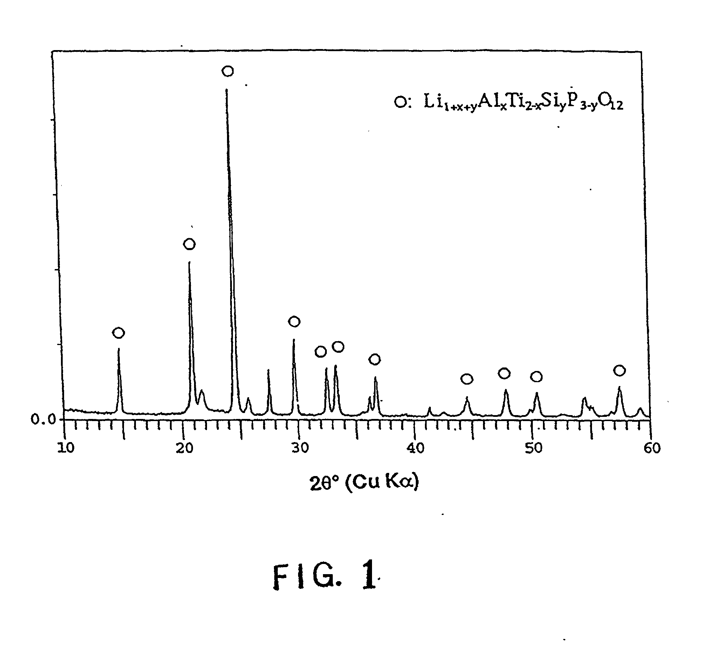

Fig. 1 shows an X-ray diffraction pattern of the glass-ceramic of Example **1**.

### Examples 2-6

Specimens of glass-ceramics were prepared in a manner similar to Example 3. The compositions and conductivities of these specimens as well as the composition and conductivity of Example 1 are shown in the following Tables 2 and 3.

**Table 2**

| | | | |
|---|---|---|---|
| (composition in mol %) | | | |

| Examples | | | |
|---|---|---|---|
| No. | **1** | **2** | **3** |
| P₂O₅ | 32 | 33.5 | 30 |
| SiO₂ | 8 | 6 | 10 |
| TiO₂ | 41 | 42 | 40 |
| Al₂O₃ | 5 | 5 | 5 |
| Ga₂O₃ | | | |
| Li₂O | 14 | 13.5 | 15 |
| conductivity | | | |
| at room temperature (S/cm) | 1.5 x 10⁻³ | 1.0 x 10⁻³ | 1.2 x 10⁻³ |

**Table 3**

| | | | |
|---|---|---|---|
| (composition in mol %) | | | |

| Examples | | | |
|---|---|---|---|
| No. | **4** | **5** | **6** |
| P₂O₅ | 35 | 32 | 35 |
| SiO₂ | 4 | 8 | 4 |
| TiO₂ | 38 | 41 | 38 |
| Al₂O₃ | 8 | | 5 |
| Ga₂O₃ | | 5 | 3 |
| Li₂O | 15 | 14 | 15 |
| conductivity | | | |
| at room temperature (S/cm) | 1.1 x 10⁻³ | 1.2 x 10⁻³ | 1.0 x 10⁻³ |

### Example 7

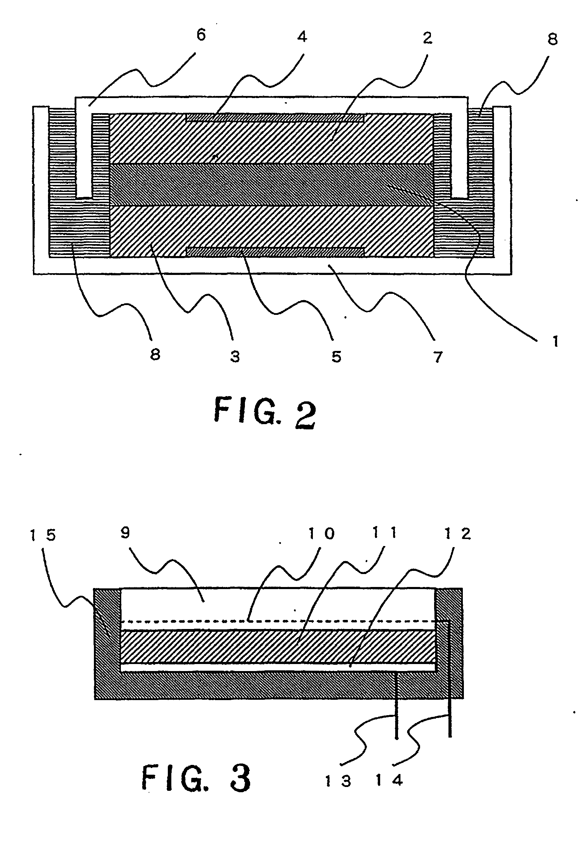

As a typical example of a lithium electric cell, an example of flat type cell is shown in the sectional view of Fig. 2. The cell is composed of a negative electrode container 6, a negative electrode collector 4 constructed of a conductive thin film or a thin film made of aluminum or stainless steel, a negative electrode 2, a lithium ion conductive glass-ceramic layer 1, a positive electrode 3, a positive electrode collector 5 constructed of a conductive thin film or a thin film made of aluminum or stainless steel, a positive electrode container 7 and an Insulating filler 8 made of an insulating material such as polypropylene. The positive and negative electrodes 2 and 3 are received in the case formed by the positive and negative electrode containers 6 and 7 in such a manner that these electrodes 2 and 3 oppose each other through the lithium ion conductive glass-ceramic layer 1. The positive electrode 3 is connected to the positive electrode container 7 through the positive electrode collector 5 and the negative electrode 2 is connected to the negative electrode container 6 through the negative electrode collector 4. Chemical energy produced in the cell can be collected as electric energy from terminals of the negative electrode container 6 and the positive electrode container 7.

In constructing the cell made according to the invention, various other materials which are conventionally used for forming a cell can be used except for the solid electrolyte portion.

The lithium ion conductive glass-ceramic layer must be sufficiently thin, i.e., 1 mm or less and preferably 0.5 mm or less. Many reports and proposals have been made about the material of the positive electrode 3 and it is typically made of LiCoO₂ or Li_{1+X}V₃O₈. Likewise, reports and proposals have been made about the material of the negative electrode 2 and it is typically made of Li₄Ti₅O₁₂ or carbon.

As to the positive and negative electrodes 2 and 3 formed on the opposite surfaces of the lithium ion conductive glass-ceramic layer 1 and the collectors 4 and 5 formed in the negative and positive electrodes 2 and 3, these component parts may be performed respectively and stacked one after another to a composite cell. Alternatively, the positive and negative electrodes 2 and 3 and the collectors 4 and 5 may be formed sequentially by any of suitable known methods Including ion spattering, CVD, screen printing, coating, sol-gel method, ion plating, ion beam evaporation and electron beam evaporation.

As a comparative example, a cell is composed in the same manner as in the above example except that the solid electrolyte is formed by mixing 1.7 mol of titanium oxide, 0.7 mol of lithium carbonate, 3.0 mol of ammonium phosphate and 0.2 mol of aluminum oxide in an agate mortar, press-forming the mixture to pellets and sintering the pellets at 900 °C for two hours, crushing the sintered pellets again in an agate mortar, press-forming the crushed material which has passed a sieve of 400 mesh to pellets again, sintering the pellets at 1000 °C for two hours and processing the sintered pellets to a thin plate.

### Example 8

As a typical example of a gas sensor, an example of a carbon dioxide gas sensor is shown in section in Fig. 3. The upper and lower surfaces of a lithium ion conductive glass-ceramic layer 11 are polished to provide the layer 11 having a thickness of 1 mm to 2 mm, preferably 1 mm or below and more preferably 0.5 mm or below. On one of the surfaces of the layer 11 (the upper surface in the illustrated example) is formed, by ion sputtering, a layer of metal carbonate, preferably lithium carbonate or a mixture of lithium carbonate and other carbonate. A platinum mesh 10 to which a lead 14 is connected is disposed on the surface of this metal carbonate layer to form an electrode. Then, a layer 9 of metal carbonate is formed on the upper surface of the electrode 10 to fix the electrode 10. On the other surface (the lower surface in the illustrated example) of the lithium ion conductive layer 11 is formed, by evaporation, a platinum thin film to form an electrode 12 and a lead 13 is connected to the electrode 12. According to this sensor, an electromotive force corresponding to the concentration of carbon dioxide gas is produced between the two electrodes due to dissociation equilibrium of the carbonate by the carbon dioxide gas in a mixture gas including the carbon dioxide gas and, therefore, the concentration of the carbon dioxide gas can be detected by measuring this electromotive force.

Forming of the carbonate layer and the electrode layers is not limited to the above method but these layers may be formed by other known methods including CVD, screen printing, sol-gel method, ion plating, ion beam evaporation, MBE, vacuum evaporation and electron beam evaporation.

## Claims

1. Lithium ion conductive glass-ceramics comprising in mol %:
| | |
|---|---|
| P₂O₅ | 26 - 40% |
| SiO₂ | 0.5 - 12 % |
| TiO₂ | 30 - 45 % |
| M₂O₃ (where M is At or Ga) | 5 - 10 % |
| Li₂O | 10 - 18 % |
and containing Li_{1+X+Y}M_{X}Ti_{2-X}Si_{Y}P_{3-Y}O₁₂ (where M is Al and/or Ga, 0 < X ≤ 0.4 and 0 < Y ≤ 0.6) as a main crystal phase and being obtained by melting raw materials to a melt, casting the melt to a glass and subjecting the glass to heat treatment.

2. Glass-ceramics as defined in claim 1 wherein said heat treatment is **characterized by** initially heating the glass under a temperature ranging from 680 °C to 800 °C and subsequently heating the glass under a temperature which is higher by 200 °C to 350 °C than the initial heating.

3. Glass-ceramics as defined in claim 1 wherein said glass-ceramics have lithium ion conductivity in the order of 10⁻³S/cm at room temperature.

4. Glass-ceramics as defined in claim 1 wherein said glass-ceramics comprise in mol %:
| | |
|---|---|
| P₂O₅ | 26-40% |
| SiO₂ | 0.5-12% |
| TiO₂ | 32-45% |
| Al₂O₃ | 5-10% |
| Li₂O | 10-18%. |

5. Glass-ceramics as defined in claim 1 wherein said glass-ceramics comprise in mol %:
| | |
|---|---|
| P₂O₅ | 26 - 40% |
| SiO₂ | 0.5 - 12 % |
| TiO₂ | 32 - 45 % |
| Ga₂O₃ | 5 - 10 % |
| Li₂O | 10 - 18 %. |

6. A solid electrolyte for an electric cell characterizes in that a lithium ion conductive glass-ceramic as defined in any of claims 1 to 5 is used as said solid electrolyte.

7. A solid electric cell **characterized In that** a lithium ion conductive glass-ceramic as defined in any of claims 1 to 5 is used as said solid electrolyte.

8. A solid electrolyte for a gas sensor **characterized in that** a lithium ion conductive glass-ceramic as defined in any of claims 1 to 5 is used as said solid electrolyte.

9. A gas sensor **characterized in that** a lithium ion conductive glass-ceramic as defined in any of claims 1 to 5 is used as said solid electrolyte.

10. A solid electric cell comprising a case, a negative electrode, a positive electrode and a solid electrolyte, the negative electrode, positive electrode and solid electrolyte being disposed in the case in such a manner that the negative electrode opposes the positive electrode through the solid electrolyte **characterized in that** the solid electrolyte is made of a lithium ion conductive glass-ceramic comprising in mol %:
| | |
|---|---|
| P₂O₅ | 26 - 40% |
| SiO₂ | 0.5 - 12 % |
| TiO₂ | 30 - 45 % |
| M₂O₃ (where M is Al or Ga) | 5 - 10 % |
| Li₂O | 10 - 18 % |
and containing Li_{1+X+Y}M_{X}Ti_{2-X}Si_{Y}P_{3-Y}O₁₂ (where M is Al and/or Ga, 0 < X ≤ 0.4 and 0 < Y ≤ 0.6) as a main crystal phase.

11. A gas sensor comprising a case, a negative electrode, a positive electrode, a solid electrolyte and a layer for which an electromotive force corresponding to the concentration of the gas is produced between the two electrodes, a lead connected to the negative electrode and a lead connected to the positive electrode, the negative electrode, positive electrode and solid electrolyte being disposed in the case in such a manner that the negative electrode opposes the positive electrode through the solid electrolyte **characterized in that** the solid electrolyte is made of a lithium ion conductive glass-ceramic comprising in mol %:
| | |
|---|---|
| P₂O₅ | 26 - 40% |
| SiO₂ | 0.5 - 12 % |
| TiO₂ | 30 - 45 % |
| M₂O₃ (where M is Al or Ga) | 5 - 10 % |
| Li₂O | 10 - 18 % |
and containing Li_{1+X+Y}M_{X}Ti_{2-X}Si_{Y}P_{3-Y}O₁₂ (where M is Al and/or Ga, 0 < X ≤ 0.4 and 0 < Y ≤ 0.6) as a main crystal phase.

12. A carbon dioxide gas sensor as defined in claim 11, wherein said layer is a metal carbonate layer.

## Patentansprüche

1. Lithiumionen leitende Glaskeramiken, die in Mol-%:
| | |
|---|---|
| P₂O₅ | 26 - 40 % |
| SiO₂ | 0,5 - 12 % |
| TiO₂ | 30 -45 % |
| M₂O₃ (wobei M Al oder Ga ist) | 5 - 10 % |
| Li₂O | 10 - 18 % |
umfassen und Li_{1+X+Y}M_{X}Ti_{2-X}Si_{Y}P_{3-Y} O₁₂ (wobei M Al und/oder Ga ist, 0<X≤0,4 und 0<Y≤0,6) als Hauptkristallphase enthalten und erhalten werden, indem man Rohmaterialien zu einer Schmelze schmilzt, die Schmelze zu einem Glas gießt und das Glas einer Wärmebehandlung unterzieht.

2. Glaskeramiken gemäß Anspruch 1, wobei die Wärmebehandlung **dadurch gekennzeichnet ist, dass** man anfänglich das Glas bei einer Temperatur im Bereich von 680 °C bis 800 °C erhitzt und anschließend das Glas bei einer Temperatur erhitzt, die um 200 °C bis 350 °C höher ist als das anfängliche Erwärmen.

3. Glaskeramiken gemäß Anspruch 1, wobei die Glaskeramiken eine Lithiumion-Leitfähigkeit in der Größenordnung von 10⁻³ S/cm bei Raumtemperatur haben.

4. Glaskeramiken gemäß Anspruch 1, wobei die Glaskeramiken in Mol-%:
| | |
|---|---|
| P₂O₅ | 26 - 40 % |
| SiO₂ | 0,5 - 12 % |
| TiO₂ | 32 -45 % |
| Al₂O₃ | 5 - 10 % |
| Li₂O | 10 - 18 % |
umfassen.

5. Glaskeramiken gemäß Anspruch 1, wobei die Glaskeramiken in Mol-%:
| | |
|---|---|
| P₂O₅ | 26 - 40 % |
| SiO₂ | 0,5 - 12 % |
| TiO₂ | 32 - 45 % |
| Ga₂O₃ | 5 - 10 % |
| Li₂O | 10 - 18 % |
umfassen.

6. Fester Elektrolyt für eine elektrische Zelle, **dadurch gekennzeichnet, dass** eine Lithiumionen leitende Glaskeramik gemäß irgendeinem der Ansprüche 1 bis 5 als fester Elektrolyt verwendet wird.

7. Feste elektrische Zelle, **dadurch gekennzeichnet, dass** eine Lithiumionen leitende Glaskeramik gemäß irgendeinem der Ansprüche 1 bis 5 als fester Elektrolyt verwendet wird.

8. Fester Elektrolyt für einen Gassensor, **dadurch gekennzeichnet, dass** eine Lithiumionen leitende Glaskeramik gemäß irgendeinem der Ansprüche 1 bis 5 als fester Elektrolyt verwendet wird.

9. Gassensor, **dadurch gekennzeichnet, dass** eine Lithiumionen leitende Glaskeramik gemaß irgendeinem der Ansprüche 1 bis 5 als fester Elektrolyt verwendet wird.

10. Feste elektrische Zelle, umfassend ein Gehäuse, eine negative Elektrode, eine positive Elektrode und einen festen Elektrolyten, wobei die negative Elektrode, die positive Elektrode und der feste Elektrolyt auf derartige Weise im Gehäuse angeordnet sind, dass die negative Elektrode durch den festen Elektrolyten hindurch der positiven Elektrode gegenüberliegt, **dadurch gekennzeichnet, dass** der feste Elektrolyt aus einer Lithiumionen leitenden Glaskeramik besteht, die in Mol-%:
| | |
|---|---|
| P₂O₅ | 26 - 40 % |
| SiO₂ | 0,5 - 12 % |
| TiO₂ | 30 -45 % |
| M₂O₃ (wobei M Al oder Ga ist) | 5 - 10 % |
| Li₂O | 10 - 18 % |
umfasst und Li_{1+X+Y}M_{X}Ti_{2-X}Si_{Y}P_{3-Y} O₁₂ (wobei M Al und/oder Ga ist, 0<X≤0,4 und 0<Y≤0,6) als Hauptkristallphase enthält.

11. Gassensor, umfassend ein Gehäuse, eine negative Elektrode, eine positive Elektrode, einen festen Elektrolyten und eine Schicht, für die eine elektromotorische Kraft, die der Konzentration des Gases entspricht, zwischen den beiden Elektroden erzeugt wird, wobei eine Stromzuleitung mit der negativen Elektrode verbunden ist und eine Stromzuleitung mit der positiven Elektrode verbunden ist, die negative Elektrode, die positive Elektrode und der feste Elektrolyt auf derartige Weise im Gehäuse angeordnet sind, dass die negative Elektrode durch den festen Elektrolyten hindurch der positiven Elektrode gegenüberliegt, **dadurch gekennzeichnet, dass** der feste Elektrolyt aus einer Lithiumionen leitenden Glaskeramik besteht, die in Mol-%:
| | |
|---|---|
| P₂O₅ | 26 - 40 % |
| SiO₂ | 0,5 - 12 % |
| TiO₂ | 30 - 45 % |
| M₂O₃ (wobei M Al oder Ga ist) | 5 - 10 % |
| Li₂O | 10 - 18 % |
umfasst und Li_{1+X+Y}M_{X}Ti_{2-X}Si_{Y}P_{3-Y} O₁₂ (wobei M Al und/oder Ga ist, 0<X≤0,4 und 0<Y≤0,6) als Hauptkristallphase enthält.

12. Kohlendioxid-Gassensor gemäß Anspruch 11, wobei die Schicht eine Metallcarbonat-Schicht ist.

## Revendications

1. Vitrocéramiques conductrices des ions lithium comprenant, en % en moles :
| | |
|---|---|
| P₂O₅ | 26 - 40 % |
| SiO₂ | 0,5 - 12 % |
| TiO₂ | 30 - 45 % |
| M₂O₃ (où M est Al ou Ga) | 5 - 10 % |
| Li₂O | 10 - 18 % |
et contenant Li_{1+K+Y}M_{X}Ti_{2-X}Si_{Y}P_{3-Y}O₁₂ (où M est Al et/ou Ga, 0 < x ≤ 0,4 et 0 < Y ≤ 0,6) à titre de phase cristalline principale, et obtenues par fusion de matières premières en une masse fondue, coulée de la masse fondue en un verre et traitement thermiques du verre.

2. Vitrocéramiques selon la revendication 1, dans lesquelles ledit traitement thermique est **caractérisé par** un chauffage initial du verre à une température située dans la plage allant de 680°C à 800°C et ensuite un chauffage du verre à une température qui est supérieure de 200°C à 350°C à celle du chauffage initial.

3. Vitrocéramiques selon la revendication 1, ayant une conductivité des ions lithium de l'ordre de 10⁻³ S/cm à la température ambiante.

4. Vitrocéramiques selon la revendication 1, lesquelles comprennent, en % en moles :
| | |
|---|---|
| P₂O₅ | 26 - 40 % |
| SiO₂ | 0,5 - 12 % |
| TiO₂ | 32 - 45 % |
| Al₂O₃ | 5 - 10 % |
| Li₂O | 10 - 18 % |

5. Vitrocéramiques selon la revendication 1, lesquelles comprennent, en % en moles :
| | |
|---|---|
| P₂O₅ | 26 - 40 % |
| SiO₂ | 0,5 - 12 % |
| TiO₂ | 32 - 45 % |
| Ga₂O₃ | 5 - 10 % |
| Li₂O | 10 - 18 % |

6. Electrolyte solide pour une pile électrique, **caractérisé en ce qu'**une vitrocéramique conductrice des ions lithium telle que définie dans l'une quelconque des revendications 1 à 5 est utilisée à titre dudit électrolyte solide.

7. Pile électrique solide, **caractérisée en ce qu'**une vitrocéramique conductrice des ions lithium telle que définie dans l'une quelconque des revendications 1 à 5 est utilisée à titre dudit électrolyte solide.

8. Électrolyte solide pour détecteur de gaz, **caractérisé en ce qu'**une vitrocéramique conductrice des ions lithium telle que définie dans l'une quelconque des revendications 1 à 5 est utilisée à titre dudit électrolyte solide.

9. Détecteur de gaz, **caractérisé en ce qu'**une vitrocéramique conductrice des ions lithium telle que définie dans l'une quelconque des revendications 1 à 5 est utilisée à titre dudit électrolyte solide.

10. Pile électrique solide comprenant un boîtier, une électrode négative, une électrode positive et un électrolyte solide, l'électrode négative, l'électrode positive et l'électrolyte solide étant disposés dans le boîtier de manière que l'électrode négative soit opposée à l'électrode positive par l'intermédiaire de l'électrolyte solide, **caractérisée en ce que** l'électrolyte solide est en une vitrocéramique conductrice des ions lithium comprenant, en % en moles :
| | |
|---|---|
| P₂O₅ | 26 - 40 % |
| SiO₂ | 0,5 - 12 % |
| TiO₂ | 30 - 45 % |
| M₂O₃ (où M est Al ou Ga) | 5 - 10 % |
| Li₂O | 10 - 18 % |
et contenant Li_{1+X+Y}M_{X}Ti_{2-X}Si_{Y}P_{3-Y}O₁₂ (où M est Al et/ou Ga, 0 < X ≤ 0,4 et 0 < Y ≤ 0,6) à titre de phase cristalline principale.

11. Détecteur de gaz comprenant un boîtier, une électrode négative, une électrode positive, un électrolyte solide et une couche pour laquelle une force électromotrice correspondant à la concentration du gaz est produite entre les deux électrodes, un conducteur connecté à l'électrode négative et un conducteur connecté à l'électrode positive, l'électrode négative, l'électrode positive et l'électrolyte solide étant disposés dans le boîtier de manière que l'électrode négative soit opposée à l'électrode positive par l'intermédiaire de l'électrolyte solide, **caractérisé en ce que** l'électrolyte solide est en une vitrocéramique conductrice des ions lithium comprenant, en % en moles :
| | |
|---|---|
| P₂O₅ | 26 - 40 % |
| SiO₂ | 0,5 - 12 % |
| TiO₂ | 30 - 45 % |
| M₂O₃ (où M est Al ou Ga) | 5 - 10 % |
| Li₂O | 10 - 18 % |
et contenant Li_{1+X+Y}M_{X}Ti_{2-X}Si_{Y}P_{3-Y}O₁₂ (où M est Al et/ou Ga, 0 < X ≤ 0,4 et 0 < Y ≤ 0,6) à titre de phase cristalline principale.

12. Détecteur de dioxyde de carbone gazeux tel que défini dans la revendication 11, dans lequel ladite couche est une couche de carbonate métallique.
